# EUROPEAN PATENT APPLICATION

(11) **EP 4 593 403 A1**
(43) Date of publication of application: **30.07.2025**
(21) Application number: 23890556.6
(22) Date of filing: 30.10.2023
(51) Int. Cl.: H04N 23/55

(54) **CAMERA MODULE AND ELECTRONIC DEVICE**

(30) Priority: 18.11.2022 CN 202211447841; 14.01.2023 CN 202310081583
(71) Applicant: Huawei Technologies Co., Ltd., Shenzhen, Guangdong 518129 (CN)
(72) Inventor: REN, Li, Shenzhen, Guangdong 518129 (CN); LI, Dengfeng, Shenzhen, Guangdong 518129 (CN); NIU, Yajun, Shenzhen, Guangdong 518129 (CN); CAI, Bin, Shenzhen, Guangdong 518129 (CN); LI, Xiaolong, Shenzhen, Guangdong 518129 (CN)
(74) Representative: Maiwald GmbH
(86) International application number: PCT/CN2023/127928
(87) International publication number: WO 2024/104120

(57) **Abstract**

This application discloses a camera module and an electronic device. The camera module includes a motor, a lens, a prism, and an image sensor. The motor has a mounting space and an avoidance space communicating with the mounting space. The mounting space is located in a middle part of the motor and penetrates from a top of the motor to a bottom of the motor. The avoidance space is located at the bottom of the motor and extends to one side of the motor. The lens is mounted in the mounting space. The prism is located on a bottom side of the motor and partially located in the avoidance space. The prism includes an incident surface and an emergent surface. The incident surface faces the lens. The incident surface and the emergent surface are located on a same side of the prism. The emergent surface is exposed relative to the motor. The image sensor is located on a side that is of the prism and that faces the lens, and is disposed facing the emergent surface. After passing through the lens, a ray enters the prism from the incident surface, is emitted from the emergent surface after being reflected a plurality of times inside the prism, and is imaged on the image sensor. The camera module in this application has both a long focal length and a small size, to consider both long focal length and miniaturization.

## Description

This application claims priority to Chinese Patent Application No. 202211447841.8, filed with the China National Intellectual Property Administration on November 18, 2022 and entitled "CAMERA MODULE AND ELECTRONIC DEVICE", and priority to Chinese Patent Application No. 202310081583.4, filed with the China National Intellectual Property Administration on January 14, 2023 and entitled "CAMERA MODULE AND ELECTRONIC DEVICE", which are incorporated herein by reference in their entireties.

### TECHNICAL FIELD

This application relates to the field of camera device technologies, and in particular, to a camera module and an electronic device.

### BACKGROUND

As the frequency at which consumers use mobile devices to take photos increases, requirements for a camera module that can provide a high zoom ratio also increase. To increase the zoom ratio, a distance (focal length) by which light incident to a camera moves to an image sensor may need to be increased. In other words, a total track length (TTL) of an optical system of the module needs to be increased due to a bottleneck of the focal length. In addition, to achieve a long total track length of the optical system, a length of the camera may need to be increased. Usually, a camera disposed in an electronic device like a smartphone may include a lens and an image sensor arranged in a direction toward a front surface or a rear surface of the electronic device. However, to increase the total track length of the optical system, a distance between an object-side lens and the image sensor may need to be increased. This may increase a size of an area between the front surface and the rear surface of the electronic device. In other words, increasing the total track length of the optical system may increase a thickness of the electronic device.

To provide a high zoom ratio without significantly increasing the thickness of the electronic device, the camera module reflects rays at 90 degrees by using a reflection structure, and then the image sensor is placed at 90 degrees, to reduce a total height of the module. However, a length of the module is increased. An excessively long length of the module increases difficulty in assembling the camera module in the electronic device, resulting in high costs.

### SUMMARY

This application provides a camera module and an electronic device. A focal length of the camera module is large, and a size of the camera module is small.

According to a first aspect, a camera module is provided. The camera module includes a motor, a lens, a prism, and an image sensor. The motor has a mounting space and an avoidance space communicating with the mounting space. The mounting space is located in a middle part of the motor and penetrates from a top of the motor to a bottom of the motor. The avoidance space is located at the bottom of the motor. The avoidance space communicates with the mounting space and extends to one side of the motor. The lens is mounted in the mounting space. The prism is located on a bottom side of the motor and partially located in the avoidance space. The prism includes an incident surface and an emergent surface. The incident surface faces the lens. The incident surface and the emergent surface are located on a same side of the prism. The emergent surface is exposed relative to the motor. The image sensor is located on a side that is of the prism and that faces the lens, and is disposed facing the emergent surface. After passing through the lens, a ray enters the prism from the incident surface, is emitted from the emergent surface after being reflected a plurality of times inside the prism, and is imaged on the image sensor.

It may be understood that, in the camera module in this application, the prism is disposed to change an optical path, so that the lens and the prism are arranged at a module height, and the image sensor and the prism are also arranged at the module height. This effectively reduces the module length. The lens and the image sensor are arranged on the same side of the prism, which effectively reduces the module height. In addition, in this application, the avoidance space is further disposed inside the motor, and the prism is partially located in the avoidance space, so that the prism, the motor, and the image sensor are arranged more compactly. Therefore, the module height can be further reduced, and an overall size of the camera module is small, to facilitate miniaturization of the camera module.

Furthermore, the lens and the image sensor are arranged on the same side of the prism, so that an optical axis of the lens is in a normal direction relationship with the incident surface and the emergent surface of the prism. In addition, a phase surface of the image sensor is in a normal direction relationship with the optical axis of the lens, and is parallel to the emergent surface of the prism. When the ray is incident to the prism through the lens, the ray is reflected a plurality of times inside the prism, and then the ray is emitted from the emergent surface and is imaged on the image sensor. In this way, before being imaged on the image sensor, the ray may be reflected a plurality of times inside the prism, so that the optical path may be folded. This effectively increases a focal length of the camera module and a total track length (total track length, TTL) of an optical system. In other words, in the camera module in this application, the prism may be disposed to reflect the ray a plurality of times, to increase the total track length of the optical system without increasing a physical length of the module, so that the camera module can be miniaturized while obtaining a long focal length.

In addition, when the motor drives the lens to move to implement an image stabilization function, a motion mode of the lens is translation. This can avoid impact on image quality because a reflection mirror in a periscope optical system rotates to cause rotation of an image in a field of view. In addition, the motor in this implementation is an integrated motor, and a structure of the motor is simpler, which helps reduce manufacturing costs of the entire camera module.

In a possible implementation, the motor includes a fastening base, an actuator, and a carrier, the actuator and the carrier are both mounted on an inner side of the fastening base, the actuator is configured to drive the carrier to move, and the lens is fastened to an inner side of the carrier. At least a part of the avoidance space is formed in the fastening base. In this way, the structure of the motor is simpler, which helps reduce the manufacturing costs of the entire camera module.

In a possible implementation, an adhesive overflow groove is formed between the carrier and the lens, the adhesive overflow groove includes a first part, a second part, and a third part that communicate with each other in sequence, the first part, the second part, and the third part are arranged in an optical axis direction of the lens, a width of the first part is greater than a width of the second part and a width of the third part, and the width of the second part is greater than the width of the third part. In this way, the adhesive overflow groove is provided, so that the lens is adhered to the carrier by using an adhesive more stably.

In a possible implementation, the width of the first part is greater than or equal to 0.5 mm. Alternatively, the carrier is provided with an adhesive flow slope facing the second part, and an included angle less than or equal to 60° is formed between the adhesive flow slope and the optical axis direction of the lens. Alternatively, the width of the third part is within a range of 0.1 mm to 0.5 mm. In this way, a shape of the adhesive overflow groove is changed, so that a distance between a wall surface of the carrier and the lens is sufficient to prevent the adhesive from overflowing.

In a possible implementation, the prism further includes a first reflective surface, a second reflective surface, and a third reflective surface. In the optical axis direction of the lens, the first reflective surface is located on a bottom side of the incident surface, and an included angle is formed between the first reflective surface and the incident surface. The second reflective surface and the incident surface are located on a same side of the prism, and the second reflective surface is located between the incident surface and the emergent surface. In the optical axis direction of the lens, the third reflective surface is located on a bottom side of the emergent surface, and an included angle is formed between the third reflective surface and the emergent surface. After entering the prism from the incident surface, the ray is reflected on the first reflective surface, the second reflective surface, and the third reflective surface in sequence, and then is emitted from the emergent surface.

It may be understood that the prism in the camera module in this application has a plurality of reflective surfaces. After the ray enters the prism from the incident surface of the prism, the ray may be reflected a plurality of times between the plurality of reflective surfaces until the ray is emitted from the emergent surface, and is imaged on the image sensor. The ray may be reflected for three or more odd times inside the prism, so that an optical path can be effectively folded, and the focal length of the camera module and the total track length of the optical system are increased. In other words, in the camera module in this application, the total track length of the optical system may be increased, without increasing a physical length of the module, by disposing the prism and a plurality of reflective surfaces inside the prism to reflect the ray a plurality of times, so that the camera module can be miniaturized while obtaining a long focal length.

In a possible implementation, the prism further includes a light blocking layer, the light blocking layer is located between the first reflective surface and the third reflective surface, the light blocking layer is configured to block the ray, and a light transmission area is formed in an upper middle part of the light blocking layer. In this way, the light blocking layer is disposed inside the prism to block the ray, to prevent impact on the image quality because of transmission of stray light outside the light transmission area.

In a possible implementation, the prism further includes a first side surface and a second side surface, the first side surface and the second side surface are respectively located on two sides of the incident surface and the emergent surface, the first side surface is parallel to the second side surface, and a light shielding layer is disposed on the first side surface and the second side surface. In this way, the light shielding layer is disposed on the first side surface and the second side surface, to prevent impact on the image quality because stray light in the camera module enters the prism.

In a possible implementation, the prism further includes a first side surface and a second side surface, the first side surface and the second side surface are respectively located on two sides of the incident surface and the emergent surface, an included angle is formed between the first side surface and the second side surface, a spacing between the first side surface and the second side surface progressively increases in a direction away from the incident surface, and a light shielding layer is disposed on the first side surface and the second side surface. In this way, the light shielding layer is disposed on the first side surface and the second side surface, to prevent impact on the image quality because stray light in the camera module enters the prism. In addition, even if the stray light enters the prism, because the spacing between the first side surface and the second side surface progressively increases in the direction away from the incident surface, the stray light emitted into the prism can be reflected inside the prism a more quantity of times, or the stray light is totally reflected inside the prism 30, so that the stray light can be finally absorbed by the first side surface or the second side surface, to prevent the stray light from being imaged on the image sensor and eliminate impact of the stray light on the image quality.

In a possible implementation, the prism is provided with a groove. An opening of the groove is formed on the first side surface, the second side surface, and a bottom surface of the prism. A groove wall of the groove is used to form the light blocking layer. In this way, the groove is provided, to help form the light blocking layer, so as to prevent impact on the image quality because of transmission of the stray light outside the light transmission area.

In a possible implementation, the camera module further includes a prism bracket, the prism bracket is located on the bottom side of the motor and a bottom side of the image sensor, and the prism is fastened to an inner side of the prism bracket. In this way, the prism is fastened to the prism bracket, so that structural stability of the entire camera module can be effectively improved, and the prism can be prevented from shaking to affect the image quality.

In a possible implementation, the prism bracket is provided with an accommodation space, a wall surface of the accommodation space is provided with a plurality of adhesive overflow grooves, and the prism is located in the accommodation space and is fastened to the wall surface of the accommodation space via an adhesive layer. In this way, the adhesive overflow grooves are provided, so that an adhesive force of the adhesive can be effectively increased, to improve the structural stability between the prism and the prism bracket.

In a possible implementation, the motor is configured to drive the lens to move in the optical axis direction of the lens, and is further configured to drive the lens to move in a direction perpendicular to the optical axis direction of the lens. In this way, the motor is an integrated motor that has both an auto focus function and an optical image stabilization function, and the structure of the motor is simpler, which helps reduce the manufacturing costs of the entire camera module.

In a possible implementation, the fastening base includes a base. The carrier includes a focus bracket and an image stabilization bracket. The focus bracket is movably connected to the base. The image stabilization bracket is movably connected to the focus bracket. The actuator is mounted on the base. The lens is fastened to the image stabilization bracket. The actuator is configured to drive the focus bracket to drive the image stabilization bracket to move relative to the base, and the actuator is further configured to drive the image stabilization bracket to move relative to the focus bracket. In this way, the motor is the integrated motor that has both the image stabilization function and the focus function. The focus function is implemented by moving the focus bracket relative to the carrier, and the image stabilization function is implemented by moving the image stabilization bracket relative to the focus bracket. Compared with a split lens motor in which a focus bracket and an image stabilization bracket are separately disposed, the motor in this application has a smaller size, which helps implement miniaturization of the motor and helps save an internal space of the camera module.

In a possible implementation, the base is provided with a first avoidance groove. The first avoidance groove penetrates a bottom of the base. The focus bracket is provided with a second avoidance groove, and the second avoidance groove communicates with a bottom space of the image stabilization bracket and the first avoidance groove. The first avoidance groove, the second avoidance groove, and the bottom space of the image stabilization bracket form the avoidance space. It may be understood that, in this application, the avoidance space is provided on the motor in the camera module, and at least a part of the prism may be located in the avoidance space, so that the motor may sink relative to the prism, to reduce a height of the motor and reduce an overall height of the camera module. This facilitates thinning of the camera module. In addition, an overall structure of the camera module is more compact, which helps save a space.

In a possible implementation, the camera module further includes a light filter. The light filter is located between the prism and the image sensor. The light filter and the emergent surface are disposed opposite to each other; or the light filter is located between the prism and the lens, and the light filter and the incident surface are disposed opposite to each other. In this way, the light filter is disposed, and the light filter is disposed opposite to the emergent surface or the incident surface, so that the ray can pass through the light filter before entering the image sensor, to filter out an invisible ray, and effectively improve the image quality.

In a possible implementation, the camera module further includes a fastener, and the light filter is fastened to the prism through the fastener. In this way, the light filter may be more firmly fastened to the prism, which helps improve the structural stability of the camera module.

In a possible implementation, the camera module further includes a circuit board, a fastener, and a light filter. The image sensor is fastened to the circuit board, and is electrically connected to the circuit board. The light filter is fastened to the circuit board through the fastener. The light filter is located between the emergent surface of the prism and the image sensor. In this way, the light filter may be more firmly fastened to the circuit board, which helps improve the structural stability of the camera module.

In a possible implementation, the camera module further includes a light filter. The light filter is disposed on the prism by using a film coating process or a film attaching process, and covers the incident surface and/or the emergent surface. In this way, the light filter is directly disposed on the prism, so that the space of the fastener can be saved, and a structure of the camera module is more compact.

According to a second aspect, an electronic device is provided. The electronic device includes an image processor and the foregoing camera module. The image processor is communicatively connected to the camera module. The image processor is configured to obtain image data from the camera module and process the image data.

### BRIEF DESCRIPTION OF DRAWINGS

FIG. 1 is a diagram of a structure of an electronic device according to an implementation of this application;
FIG. 2 is a partial cross-sectional view of the electronic device shown in FIG. 1 on an A-A line in an implementation;
FIG. 3 is a diagram of a structure of a camera module shown in FIG. 1 in an implementation;
FIG. 4 is a diagram of a breakdown structure of the camera module shown in FIG. 3;
FIG. 5 is a diagram of a breakdown structure of a camera assembly shown in FIG. 4 in an implementation;
FIG. 6 is a diagram of a structure of a prism bracket shown in FIG. 5 from another perspective;
FIG. 7 is a diagram of a structure of a prism bracket shown in FIG. 5;
FIG. 8 is a diagram of a structure of a prism shown in FIG. 5 in an implementation;
FIG. 9 is a diagram of a structure of a prism and a prism bracket shown in FIG. 5;
FIG. 10 is a schematic partial cross-sectional view of the camera module shown in FIG. 3 on a B-B line in an implementation;
FIG. 11 is a diagram of a partial structure of the camera assembly shown in FIG. 5;
FIG. 12 is a schematic partial cross-sectional view of the camera module shown in FIG. 3 on a B-B line in an implementation;
FIG. 13a is an exploded view of a motor shown in FIG. 5 in an implementation;
FIG. 13b is a schematic partial cross-sectional view of the camera module shown in FIG. 3 on a B-B line in an implementation;
FIG. 14 is an exploded view of an actuator of the motor shown in FIG. 13a;
FIG. 15 is a schematic partial cross-sectional view of the camera module shown in FIG. 3 on a B-B line from another perspective in an implementation;
FIG. 16 is a diagram of a partial mounting process of a camera assembly shown in FIG. 4 in an implementation;
FIG. 17 is a schematic partial cross-sectional view of the camera module shown in FIG. 3 on a B-B line;
FIG. 18 is a diagram of a partial mounting process of a camera assembly shown in FIG. 4 in another implementation;
FIG. 19 is a schematic partial cross-sectional view of the camera module shown in FIG. 3 on a B-B line in an implementation;
FIG. 20 is a diagram of a structure of the prism shown in FIG. 8 from another perspective;
FIG. 21 is a diagram of a structure of the prism shown in FIG. 8 from still another perspective;
FIG. 22 is a schematic cross-sectional view of the prism shown in FIG. 20 on a C-C line in an implementation;
FIG. 23 is a schematic cross-sectional view of the prism shown in FIG. 20 on a D-D line in an implementation;
FIG. 24 is a diagram of assembling the prism shown in FIG. 8 in another implementation;
FIG. 25 is a schematic partial cross-sectional view of the camera module shown in FIG. 3 on a B-B line;
FIG. 26 is a diagram of a structure of a prism and an image sensor shown in FIG. 25;
FIG. 27 is a diagram of a structure of the structure shown in FIG. 26 from another perspective;
FIG. 28 is a diagram of a structure of the prism shown in FIG. 20 in another implementation;
FIG. 29 is a diagram of a structure of the prism shown in FIG. 28 from another perspective;
FIG. 30 is a schematic cross-sectional view of the prism shown in FIG. 28 on an E-E line in an implementation;
FIG. 31 is a schematic cross-sectional view of a structure shown in FIG. 12 in another implementation;
FIG. 32 is a schematic cross-sectional view of a structure shown in FIG. 12 in still another implementation;
FIG. 33 is a schematic cross-sectional view of a structure shown in FIG. 12 in yet another implementation; and
FIG. 34 is a schematic cross-sectional view of a structure shown in FIG. 12 in another implementation.

### DESCRIPTION OF EMBODIMENTS

For ease of understanding, English abbreviations and related technical terms used in embodiments of this application are first explained and described below.

A focal power (focal power) is equal to a difference between convergence of an image beam and convergence of an object beam, and represents a capability of an optical system to deflect rays.

For a lens or a lens assembly with a positive focal power, the lens or lens assembly has a positive focal length, and has an effect of converging rays.

For a lens or a lens assembly with a negative focal power, the lens or lens assembly has a negative focal length, and has an effect of diverging rays.

A focal length (focal length) is a measurement of how strongly the optical system converges or diverges light, and refers to, when a clear image of an infinite scene is formed on a focal plane by using a lens or a lens assembly, a perpendicular distance from an optical center of the lens or the lens assembly to the focal plane. From a practical perspective, the focal length may be understood as a distance from a center of a camera lens to a plane when an object is at an infinite distance. For a prime lens, a location of an optical center of the prime lens is fixed. For a long-focus lens, a change in an optical center of a camera lens causes a change in a focal length of the camera lens.

An effective focal length (effective focal length, EFL) of a camera lens is a distance from a center of the camera lens to a focal point.

For an object side surface, with a lens as a boundary, a side on which a shot object is located is an object side, and a surface of the lens close to the object side is referred to as the object side surface.

For an image side surface, with a lens as a boundary, a side on which an image of a shot object is located is an image side, and a surface of the lens close to the image side is referred to as the image side surface.

An aperture diaphragm (aperture diaphragm) is an apparatus configured to control an amount of light reaching a light-sensitive surface after rays pass through a camera lens, and is usually located in the camera lens.

An F number (Fno) is a relative value (a reciprocal of a relative aperture) obtained by dividing a focal length of a camera lens by an entrance pupil diameter of the camera lens. When the F number is smaller, an amount of admitted light in a same unit time is larger. When the F number is larger, a depth of field is smaller, and shot background content is blurred, similar to an effect of a long-focus lens.

A total track length (total track length, TTL) is a total length from a surface of a camera lens closest to an object side to an imaging plane. The TTL is a main factor that determines a camera height.

An imaging plane is a carrier plane that is located on image sides of all lenses in a long-focus lens and on which an image is formed after rays sequentially pass through the lenses in the long-focus lens.

An optical axis is an axis that runs perpendicularly through the center of a lens. An optical axis of a camera lens is an axis that passes through centers of lenses of the camera lens. When rays parallel to the optical axis enter a convex lens, an ideal convex lens converges all rays at one point behind the lens. This point at which all the rays converge is a focal point.

The focal point is a point at which parallel rays converge after being refracted by a lens or a lens assembly.

An image focal plane, also referred to as a rear focal plane or a second focal plane, is a flat surface that passes through an image focal point (also referred to as a rear focal point or a second focal point) and that is perpendicular to an optical axis of a system.

An Abbe number, in other words, a dispersion coefficient, is a difference ratio of refractive indices of an optical material at different wavelengths, and represents a degree of dispersion of the material.

Aberration: A paraxial area of an optical system has the properties of an ideal optical system. A paraxial ray emitted from a point on an object intersects an image plane at one point (in other words, a paraxial image point). However, rays actually passing through different apertures of a camera lens can hardly perfectly intersect at one point. Instead, there are deviations from the position of the paraxial image point. These deviations are collectively referred to as aberrations.

An axial chromatic aberration (longitudinal spherical aber) is also referred to as a longitudinal chromatic aberration or a positional chromatic aberration or an axial chromatic aberration. A beam of rays parallel to an optical axis converges at different positions after passing through a camera lens. This aberration is referred to as a positional chromatic aberration or an axial chromatic aberration. This is because positions of images formed by the camera lens for light of different wavelengths are different, so that image focal planes of light of different colors cannot overlap during final imaging, and polychromatic light is scattered to form dispersion.

A distortion (distortion) is a degree at which an image formed by an optical system for an object is distorted relative to the object. A distortion is caused because a height of a point at which chief rays with different fields of view intersect a Gaussian image plane after the chief rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

ImgH (Image Height) indicates a half of a diagonal length of an effective pixel area on a photosensitive chip, in other words, an image height of an imaging plane.

Astigmatism (astigmatism): Because an object point is not on an optical axis of an optical system, a beam emitted by the object point has an oblique angle to the optical axis. After the beam is refracted by a lens, convergence points of a meridian pencil and a sagittal pencil are not a same point. That is, the beam cannot be focused at one point, and imaging is not clear, resulting in astigmatism. The meridian pencil and the sagittal pencil are names of beams in two perpendicular planes in a rotationally symmetrical optical system.

A meridian plane (meridian plane) is a flat surface formed by main rays (a main beam) of an object point outside an optical axis and the optical axis.

A sagittal plane (sagittal plane) is a flat surface that passes through the main rays (main beam) of the object point outside the optical axis and that is perpendicular to the meridian plane.

A curvature of field (curvature of field) is used for indicating a difference in an optical axis direction between a position of the clearest image point in a non-central field of view array passing through an optical camera lens assembly and a position of the clearest image point in a central field of view. When a lens has a curvature of field, an intersection of a whole beam does not coincide with an ideal image point. Although a clear image point can be obtained at each specific point, a whole image plane is a curved surface.

The following describes technical solutions of embodiments in this application with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more. The terms "first", "second", and "third" are merely used for a purpose of description, and shall not be understood as an indication or an implication of relative importance or an implicit indication of a quantity of indicated technical features. Therefore, the features defined with "first", "second", and "third" may explicitly or implicitly include one or more of the features.

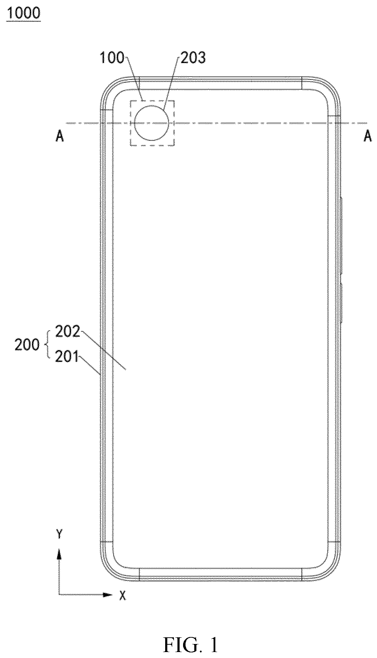

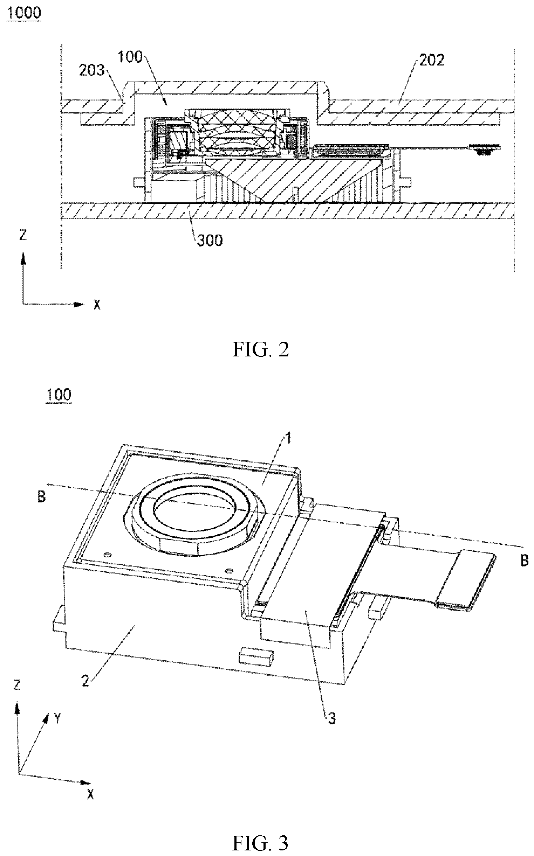

FIG. 1 is a diagram of a structure of an electronic device 1000 according to an implementation of this application. FIG. 2 is a partial cross-sectional view of the electronic device 1000 shown in FIG. 1 on an A-A line in an implementation.

As shown in FIG. 1 and FIG. 2, the electronic device 1000 may be a device having a camera module, for example, a mobile phone, a tablet computer (tablet personal computer), a laptop computer (laptop computer), a personal digital assistant (personal digital assistant, PDA), a camera, a personal computer, a notebook computer, an in-vehicle device, a wearable device, augmented reality (augmented reality, AR) glasses, an AR helmet, virtual reality (virtual reality, VR) glasses, or a VR helmet. In the embodiment shown in FIG. 1, descriptions are provided by using an example in which the electronic device 1000 is a mobile phone.

As shown in FIG. 1 and FIG. 2, the electronic device 1000 may include a camera module 100, a device housing 200, a screen 300, and an image processor (not shown in the figure). The camera module 100 may be a rear-facing camera module, or may be a front-facing camera module. The image processor may be communicatively connected to the camera module 100. The image processor may be configured to obtain image data from the camera module 100 and process the image data.

It should be noted that FIG. 1 and the following related accompanying drawings show only some components included in the electronic device 1000 as an example. Actual shapes, actual sizes, actual positions, and actual structures of these components are not limited by FIG. 1 and the following accompanying drawings. In addition, when the electronic device 1000 is a device in another form, the electronic device 1000 may not include the screen 300.

For ease of description, a width direction of the electronic device 1000 is defined as an X axis. A length direction of the electronic device 1000 is a Y axis. A thickness direction of the electronic device 1000 is a Z axis. It may be understood that a coordinate system of the electronic device 1000 may be flexibly set based on a specific actual requirement.

In an implementation, the device housing 200 may include a frame 201 and a rear cover 202. The rear cover 202 is fastened to the frame 201. For example, the rear cover 202 may be fixedly connected to the frame 201 through an adhesive. The rear cover 202 and the frame 201 may alternatively be an integrally formed structure, that is, the rear cover 202 and the frame 201 are an integral structure.

In addition, the screen 300 may be located on a side that is of the frame 201 and that is away from the rear cover 202. In this case, the screen 300 and the rear cover 202 are respectively located on two sides of the frame 201. The screen 300, the frame 201, and the rear cover 202 jointly enclose an inside of the electronic device 1000. The inside of the electronic device 1000 may be configured to place a component of the electronic device 1000, for example, a battery, a telephone receiver, or a microphone. The screen 300 may be a flat screen, or may be a curved screen.

For example, the camera module 100 may be located in the inside of the electronic device 1000. The camera module 100 may be fastened to a side that is of the screen 300 and that faces the rear cover 202. The rear cover 202 may be provided with a light transmission hole 203. A shape of the light transmission hole 203 is not limited to a circle shown in FIG. 1. The inside of the electronic device 1000 communicates with the outside of the electronic device 1000 through the light transmission hole 203. Rays outside the electronic device 1000 may enter the inside of the electronic device 1000 through the light transmission hole 203. The camera module 100 may collect ambient rays that enter the inside of the electronic device 1000.

For example, the camera module 100 may be a common camera module (that is, an optical axis direction of the camera module 100 is the thickness direction of the electronic device 1000). In some implementations, the camera module 100 may alternatively be a periscope camera module (that is, the optical axis direction of the camera module 100 is the width direction of the electronic device 1000).

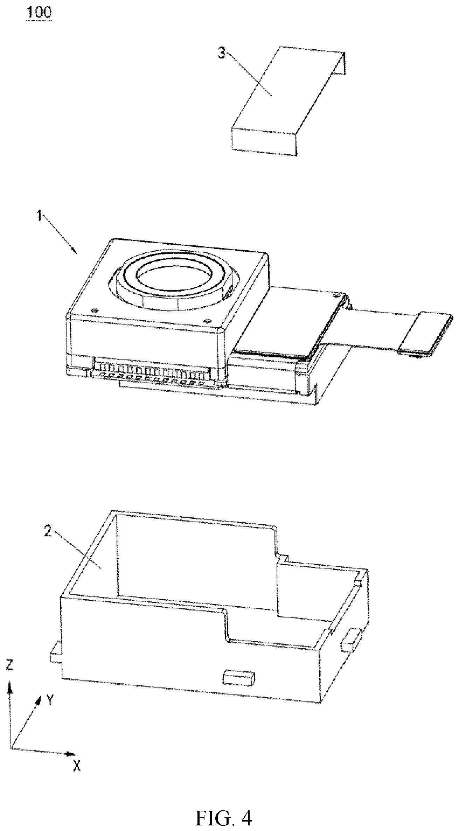

FIG. 3 is a diagram of a structure of a camera module 100 shown in FIG. 1 in an implementation. FIG. 4 is a diagram of a breakdown structure of the camera module 100 shown in FIG. 3.

As shown in FIG. 3 and FIG. 4, the camera module 100 may include a camera assembly 1, a housing 2, and a cover plate 3. The camera assembly 1 may be disposed inside the housing 2. The cover plate 3 may cover at least a part of the camera assembly 1, and cover the housing 2. In this case, at least a part of the camera assembly 1 may be located between the cover plate 3 and the housing 2.

It should be understood that, in this implementation, a width direction of the camera module 100 is also the length direction of the electronic device 1000, and is a Y-axis direction. A length direction of the camera module 100 is also the width direction of the electronic device 1000, and is an X-axis direction. A thickness direction of the camera module 100 is also the thickness direction of the electronic device 1000, and is a Z-axis direction. In another implementation, a coordinate system of the camera module 100 may be flexibly set based on a specific actual requirement.

The foregoing specifically describes the structures of the electronic device 1000 and the camera module 100. The following specifically describes the camera assembly 1 in the camera module 100 with reference to related accompanying drawings.

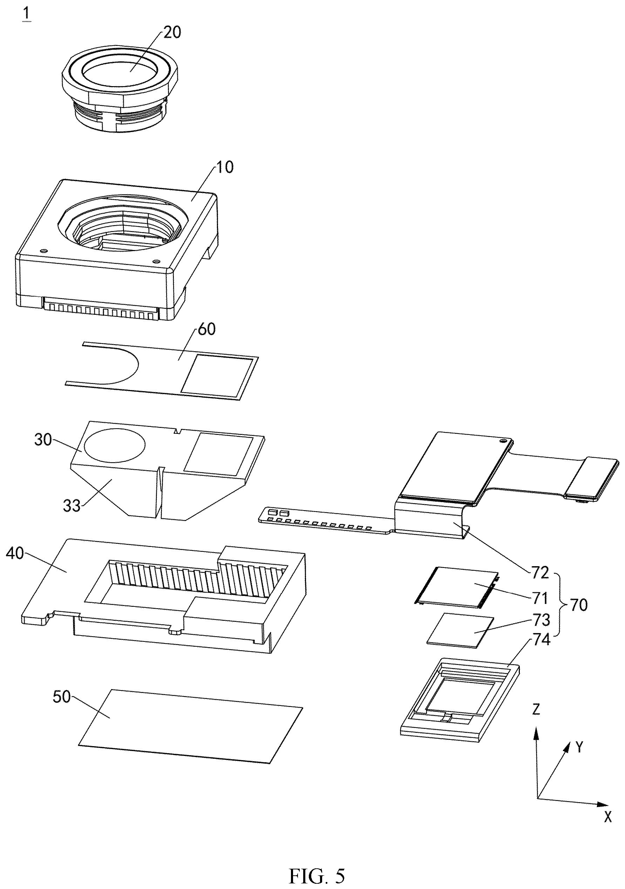

FIG. 5 is a diagram of a breakdown structure of the camera assembly 1 shown in FIG. 4 in an implementation.

As shown in FIG. 5, the camera assembly 1 may include a motor 10, a lens 20, a prism 30, a prism bracket 40, a first light shielding sheet 50, a second light shielding sheet 60, an image sensor 71, a circuit board 72, a light filter 73, and a fastener 74. The light filter 73 may be an infrared cut-off filter.

For example, the circuit board 72 may be a rigid-flexible circuit board, or a flexible circuit board. The motor 10 may be electrically connected to the image sensor 71 via the circuit board 72. In some implementations, a connector (not shown in the figure) may be further disposed on the circuit board 72. The circuit board 72 may be electrically connected to a mainboard (not shown in the figure) of the electronic device 1000 via the connector.

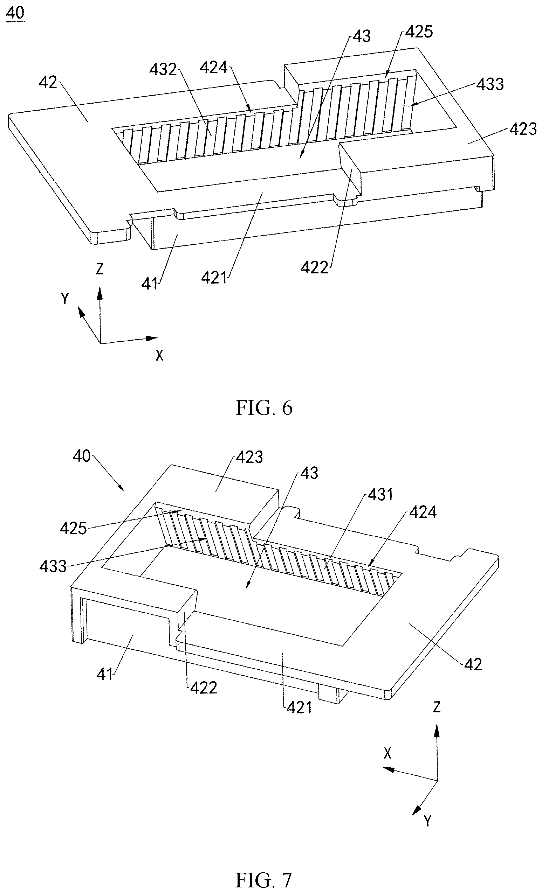

FIG. 6 is a diagram of a structure of the prism bracket 40 shown in FIG. 5 from another perspective. FIG. 7 is a diagram of a structure of the prism bracket 40 shown in FIG. 5.

As shown in FIG. 6 and FIG. 7, the prism bracket 40 may include a body portion 41 and a support portion 42. The support portion 42 is connected to the body portion 41. The body portion 41 may be approximately a frame body. In this case, a space enclosed by the support portion 42 and the body portion 41 may form an accommodation space 43 of the prism bracket 40. It should be understood that, to facilitate description of a specific structure and shape of the prism bracket 40, the prism bracket 40 is divided into two parts for description in this implementation, but this does not affect that the prism bracket 40 is an integrally formed structure. The integrally formed structure is obtained by performing an integrally forming process on two components. During formation of one of the two components, the component is connected to the other component, and the two components are connected together without reprocessing (for example, adhering, welding, buckle connection, or screw connection). In another implementation, the support portion 42 may alternatively be fastened to the body portion 41 in an adhering manner or in another manner.

For example, the accommodation space 43 may have a first wall surface 431 and a second wall surface 432 that are disposed opposite to each other. In this implementation, both the first wall surface 431 and the second wall surface 432 may be wall surfaces extending in the X-axis direction. A plurality of second adhesive overflow grooves 433 spaced apart each other may be provided on both the first wall surface 431 and the second wall surface 432. In an implementation, the second adhesive overflow groove 433 may be in a stripe shape.

For example, the support portion 42 may include a first upper surface 421, a step surface 422, and a second upper surface 423 that are connected in sequence. The first upper surface 421, the second upper surface 423, and the step surface 422 may all be located on a side that is of the support portion 42 and that is away from the body portion 41. The first upper surface 421 and the second upper surface 423 have a height difference. In this implementation, the second upper surface 423 is higher than the first upper surface 421. In this case, the first upper surface 421 may sink relative to the second upper surface 423. It should be understood that a height in this implementation is a height in the Z-axis direction.

For example, the accommodation space 43 includes a first light transmission hole 424 and a second light transmission hole 425 that communicate with each other. The first light transmission hole 424 may penetrate the first upper surface 421 and the step surface 422. The second light transmission hole 425 may penetrate through the second upper surface 423.

For example, a material of the prism bracket 40 may be a polymer material (for example, PC, PA, or LCP) or a metal material.

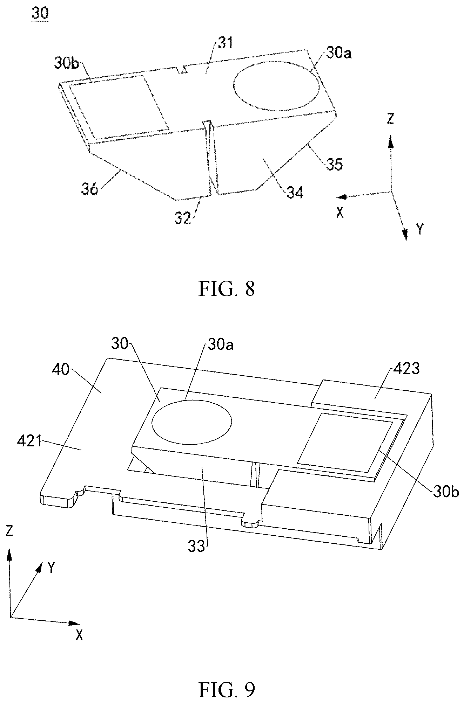

FIG. 8 is a diagram of a structure of the prism 30 shown in FIG. 5 in an implementation.

As shown in FIG. 8, the prism 30 may include a first surface 31, a second surface 32, a first side surface 33, a second side surface 34, a third side surface 35, and a fourth side surface 36. The first surface 31 may be disposed opposite to the second surface 32. The first surface 31 is also a top surface of the prism 30. The second surface 32 is also a bottom surface of the prism 30. The first side surface 33, the second side surface 34, the third side surface 35, and the fourth side surface 36 may all be connected between the first surface 31 and the second surface 32. The first side surface 33, the third side surface 35, the second side surface 34, and the fourth side surface 36 may be sequentially connected to each other end to end. In this case, the first side surface 33 and the second side surface 34 may be respectively located on two sides of the first surface 31.

For example, the first surface 31 includes an incident surface 30a and an emergent surface 30b that are spaced apart each other. In this case, the incident surface 30a and the emergent surface 30b may be located on a same side of the prism 30. After entering the prism 30 from the incident surface 30a, a ray may be reflected a plurality of times inside the prism 30, and then is emitted from the emergent surface 30b. In other words, the incident surface 30a and the emergent surface 30b may be transmission surfaces that are of the prism 30 and that are used for optical signal transmission. Reflection of the ray inside the prism 30 may be common reflection or total reflection. For example, when an incident angle of the ray is close to or greater than a critical angle of the prism 30, the ray may be totally reflected (TIR) inside the prism 30.

It may be understood that, a part of the first surface 31 may be coated with an ink layer, and another part of the first surface 31 is not coated with the ink layer, so that the incident surface 30a and the emergent surface 30b that are spaced apart each other are formed on the part that is not coated with the ink layer. Alternatively, a light shielding sheet may be disposed on the first surface 31, so that a part of the first surface 31 is shielded and another part of the first surface 31 is not shielded. In this way, the incident surface 30a and the emergent surface 30b that are spaced apart each other are formed on the part that is not shielded.

For example, a length of the prism 30 orthogonal to the optical axis direction (namely, the X-axis direction in this implementation) may be greater than a length of the prism 30 parallel to the optical axis direction (namely, the Z-axis direction in this implementation).

It should be noted that specific disposing of the prism 30 is described in detail below with reference to related accompanying drawings, and details are not described herein again.

FIG. 9 is a diagram of a structure of the prism 30 and the prism bracket 40 shown in FIG. 5.

As shown in FIG. 6, FIG. 7, and FIG. 9, the prism 30 may be located in the accommodation space 43 of the prism bracket 40. In this case, the first side surface 33 of the prism 30 may be disposed opposite to the first wall surface 431 of the accommodation space 43. The second side surface 34 (refer to FIG. 8) of the prism 30 may be disposed opposite to the second wall surface 432 of the accommodation space 43.

For example, the plurality of second adhesive overflow grooves 433 inside the prism bracket 40 may be coated with an adhesive to form an adhesive layer. In this case, the first side surface 33 of the prism 30 may be fastened to the first wall surface 431 of the accommodation space 43 via the adhesive layer. The second side surface 34 of the prism 30 may be fastened to the second wall surface 432 of the accommodation space 43 via the adhesive layer. It may be understood that, adhesive strength of the adhesive can be effectively improved by providing the plurality of second adhesive overflow grooves 433, so that a connection between the prism 30 and the prism bracket 40 is more firm, to help improve structural stability of the camera assembly 1.

In some implementations, the prism bracket 40 may be assembled and fastened to the prism 30 from above the prism 30.

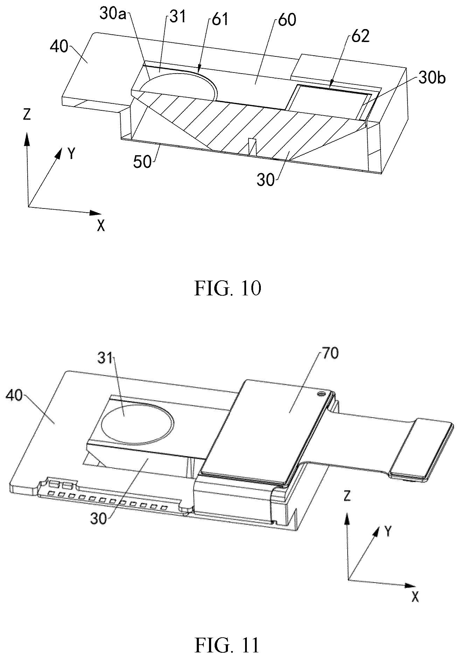

FIG. 10 is a schematic partial cross-sectional view of the camera module 100 shown in FIG. 3 on a B-B line in an implementation.

As shown in FIG. 10, the first light shielding sheet 50 may be fastened to a surface that is of the prism bracket 40 and that is away from the prism 30. A material of the first light shielding sheet 50 may be polyethylene glycol terephthalate (polyethylene glycol terephthalate, PET). In this case, the first light shielding sheet 50 may be a black membrane, and can absorb the ray while having a low reflectivity. In this way, the first light shielding sheet 50 is disposed, so that stray light reflected inside the camera module 100 can be prevented from entering the prism 30 to affect the image quality.

In some implementations, a material of the first light shielding sheet 50 may alternatively be metal. In this case, the first light shielding sheet 50 may be a metal sheet. A surface of the first light shielding sheet 50 may be sprayed with light shielding ink. In another implementation, a material of the first light shielding sheet 50 may alternatively be polycarbonate (Polycarbonate, PC). The first light shielding sheet 50 may be doped with carbon black.

For example, the second light shielding sheet 60 may be fastened to the first surface 31 of the prism 30. A light inlet hole 61 and a light outlet hole 62 may be provided on the second light shielding sheet 60. It may be understood that, a part that is of the first surface 31 and that is disposed directly opposite to the light inlet hole 61 of the second light shielding sheet 60 forms the incident surface 30a. A part that is of the first surface 31 and that is disposed directly opposite to the light outlet hole 62 of the second light shielding sheet 60 forms the emergent surface 30b. In this way, when the ray enters the camera module 100, the ray may pass through the light inlet hole 61, enter from the incident surface 30a to the prism 30, be emitted from the emergent surface 30b, and then pass through the light outlet hole 62.

For example, a material of the second light shielding sheet 60 may be polyethylene glycol terephthalate (polyethylene glycol terephthalate, PET). In this case, the second light shielding sheet 60 may be a black membrane, and can absorb the ray while having a low reflectivity. In this way, the second light shielding sheet 60 is disposed, so that the stray light reflected inside the camera module 100 can be prevented from entering the prism 30 to affect the image quality.

In some implementations, a material of the second light shielding sheet 60 may alternatively be metal. In this case, the second light shielding sheet 60 may be a metal sheet. A surface of the second light shielding sheet 60 may be sprayed with light shielding ink. In another implementation, a material of the second light shielding sheet 60 may alternatively be polycarbonate (Polycarbonate, PC). The second light shielding sheet 60 may be doped with carbon black.

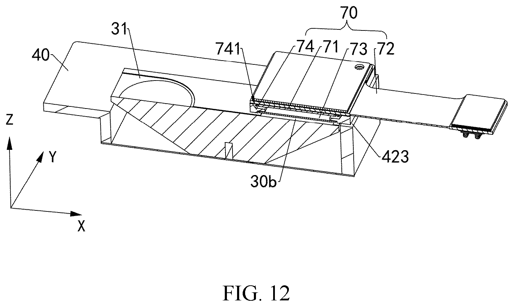

FIG. 11 is a diagram of a partial structure of the camera assembly 1 shown in FIG. 5. FIG. 12 is a schematic partial cross-sectional view of the camera module 100 shown in FIG. 3 on a B-B line in an implementation.

As shown in FIG. 11 and FIG. 12, the fastener 74 may be a fastening support. The fastener 74 may be fastened to the circuit board 72. The fastener 74 may be provided with an avoidance hole 741.

In addition, the image sensor 71 may be fastened to the circuit board 72, and at least a part of the image sensor 71 is located in the avoidance hole 741. In addition, the image sensor 71 is further electrically connected to the circuit board 72.

As shown in FIG. 11 and FIG. 12, the light filter 73 may be fastened to the fastener 74, and is located in the avoidance hole 741. The light filter 73 is located on a side that is of the image sensor 71 and that is away from the circuit board 72. In this case, the circuit board 72, the image sensor 71, and the light filter 73 may be arranged in the Z-axis direction. Both the image sensor 71 and the light filter 73 may be located at a bottom of the circuit board 72.

For example, a surface that is of the fastener 74 and that is away from the image sensor 71 may be fastened to the second upper surface 423 of the prism bracket 40. In this case, the image sensor 71, the circuit board 72, the light filter 73, and the fastener 74 may form a sensor assembly 70 of the camera module 100. In other words, the sensor assembly 70 may be fastened to the second upper surface 423 of the prism bracket 40.

As shown in FIG. 12, the light filter 73 and the emergent surface 30b of the prism 30 are disposed opposite to each other. When the ray is emitted from the emergent surface 30b of the prism 30, the ray may pass through the light filter 73, and then be imaged on the image sensor 71. In this way, before entering the image sensor 71, the ray further needs to pass through the light filter 73, so that invisible light can be filtered out via the light filter 73, to improve the image quality. When the light filter 73 is an infrared cut-off filter, the light filter 73 may filter out invisible light in an infrared band, to prevent the image sensor 71 from receiving infrared light to cause a problem that a picture is reddish.

For example, the image sensor 71 may be parallel to the emergent surface 30b of the prism 30.

For example, the sensor assembly 70 and the prism bracket 40 may be assembled by using an active alignment (active alignment, AA) technology. The sensor assembly 70 may be captured and assembled by a mobile mechanical arm of a device assembly machine. The mobile mechanical arm for capturing the sensor assembly 70 may be a mobile mechanical arm for turning on the image sensor 71. After the mobile mechanical arm captures the sensor assembly 70, a position of the sensor assembly 70 may be continuously adjusted by using the device assembly machine, to find a clearest image in images output by the image sensor 71, and the position of the sensor assembly 70 at this time is fastened, to complete assembly of the sensor assembly 70 and the prism bracket 40.

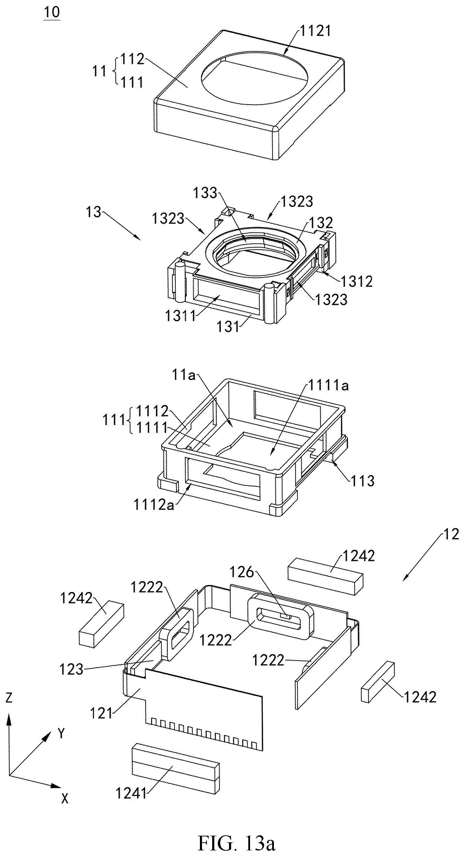

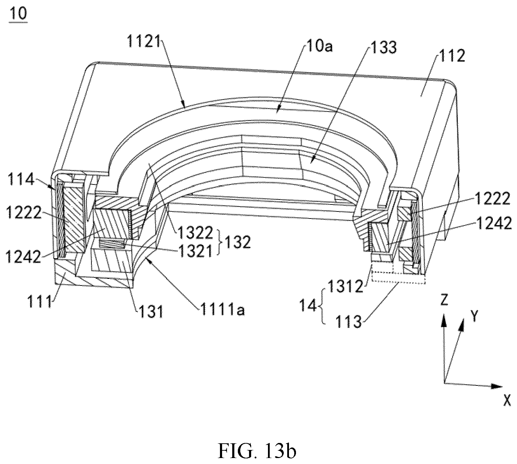

FIG. 13a is an exploded view of the motor 10 shown in FIG. 5 in an implementation. FIG. 13b is a schematic partial cross-sectional view of the camera module 100 shown in FIG. 3 on a B-B line in an implementation.

As shown in FIG. 13a and FIG. 13b, the motor 10 may include a fastening base 11, an actuator 12, and a carrier 13. For example, the fastening base 11 may include a base 111 and a casing 112. The base 111 may be approximately in a cube shape. The base 111 may include a bottom 1111 and a frame portion 1112. The frame portion 1112 may be fastened to the bottom 1111 and enclose an accommodating space 11a. The accommodating space 11a may be used to accommodate at least a part of the carrier 13 and the lens 20.

For example, a first communicating hole 1111a may be provided at the bottom 1111. The outside of the motor 10 and the accommodating space 11a communicate with each other through the first communicating hole 1111a. The frame portion 1112 may be provided with an avoiding hole 1112a. The avoiding hole 1112a may pass through an inner circumferential side and an outer circumferential side of the frame portion 1112, and communicates with the accommodating space 11a.

For example, a first avoidance groove 113 may be further provided on the base 111. The first avoidance groove 113 may penetrate the bottom 1111 and the frame portion 1112, and communicate with the first communicating hole 1111a at the bottom 1111. In this case, an inner side surface of the bottom 1111 may face the first avoidance groove 113.

For example, the casing 112 may be approximately in a cube shape. The casing 112 may be fastened to the bottom 1111 of the base 111. In this case, a space enclosed by the casing 112 and the base 111 may form an entire mounting space 10a of the motor 10. The mounting space 10a may be located in a middle part of the motor 10.

For example, the casing 112 may be disposed around the frame portion 1112 of the base 111. In this case, a space enclosed by the casing 112 and the base 111 (namely, a space enclosed by an inner side of the fastening base 11) may form the entire mounting space 10a of the motor 10. For example, a gap 114 may exist between the casing 112 and the frame portion 1112. The casing 112 may further be provided with a second communicating hole 1121. The outside of the motor 10 may communicate with the accommodating space 11a through the second communicating hole 1121, and the second communicating hole 1121 is disposed opposite to the first communicating hole 1111a. It should be understood that, in this implementation, the accommodating space 11a, the first communicating hole 1111a, the second communicating hole 1121, and the gap 114 may all form at least a part of the mounting space 10a of the motor 10.

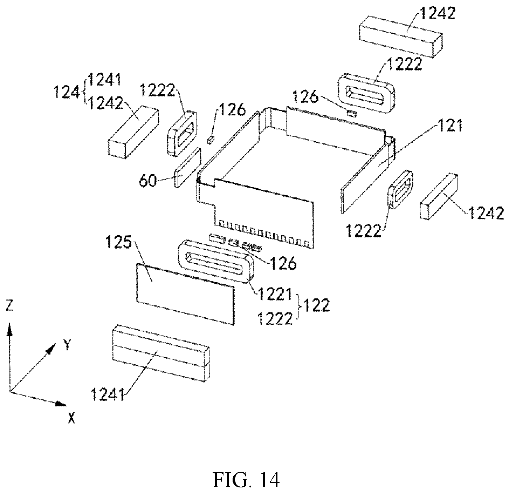

FIG. 14 is an exploded view of the actuator 12 of the motor 10 shown in FIG. 13a.

As shown in FIG. 13a to FIG. 14, the actuator 12 may include a drive circuit board 121, a coil 122, a driver chip 123, a magnetic piece 124, a magnetic attraction sheet 125, and a position sensor 126. For example, the coil 122 may be fastened to the drive circuit board 121, and is electrically connected to the drive circuit board 121. The coil 122 may include a focus coil 1221 and an image stabilization coil 1222. The magnetic attraction sheet 125 may be fastened to a side part that is of the drive circuit board 121 and that is away from the coil 122. The position sensor 126 may be fastened to the drive circuit board 121, and is electrically connected to the drive circuit board 121. For example, the position sensor 126 may be located in a coil hole of the coil 122. The driver chip 123 may be fastened to the drive circuit board 121, and is electrically connected to the drive circuit board 121. In this case, the driver chip 123 may be electrically connected to both the coil 122 and the position sensor 126 via the drive circuit board 121. The driver chip 123 may be configured to input a signal to the coil 122, and obtain information from the position sensor 126. For example, the driver chip 123 and the coil 122 may be located on a same side of the drive circuit board 121.

As shown in FIG. 13b and FIG. 14, both the drive circuit board 121 and the magnetic attraction sheet 125 may be at least partially located in the gap 114 between the casing 112 and the frame portion 1112. The drive circuit board 121 may be disposed around the frame portion 1112, and is fastened to the outer circumferential side of the frame portion 1112. In this case, the coil 122, the driver chip 123, and the position sensor 126 may all be located in the avoiding hole 1112a of the frame portion 1112. In other words, the drive circuit board 121, the coil 122, the driver chip 123, the magnetic piece 124, the magnetic attraction sheet 125, and the position sensor 126 may all be mounted in the mounting space 10a of the motor 10.

As shown in FIG. 13a and FIG. 13b, the carrier 13 may be mounted in the accommodating space 11a of the base 111. For example, the carrier 13 may include a focus bracket 131 and an image stabilization bracket 132. The focus bracket 131 may be movably connected to the base 111. For example, the focus bracket 131 may be slidably connected to the base 111 by using a sliding shaft. The image stabilization bracket 132 may include a first bracket 1321 and a second bracket 1322. The first bracket 1321 may be movably connected to the focus bracket 131. The second bracket 1322 may be movably connected to the first bracket 1321. For example, the first bracket 1321 may be slidably connected to the focus bracket 131 through roll balls. The second bracket 1322 may be slidably connected to the first bracket 1321 through roll balls.

For example, the focus bracket 131 may move relative to the base 111 in the Z-axis direction. The first bracket 1321 may move relative to the focus bracket 131 in the X-axis direction. The second bracket 1322 may move relative to the first bracket 1321 in the Y-axis direction.

For example, the carrier 13 may be provided with a third communicating hole 133. The third communicating hole 133 may penetrate the second bracket 1322, the first bracket 1321, and the focus bracket 131 in sequence. The lens 20 may be mounted in the third communicating hole 133 and fastened to the second bracket 1322, that is, the lens 20 may be located on an inner side of the carrier 13. When the ray is emitted into the motor 10, the ray may pass through the first communicating hole 1111a and the lens 20 in sequence, and then be emitted from the motor 10 through the second communicating hole 1121. It should be noted that a specific mounting manner of the lens 20 and the carrier 13 is described below with reference to related accompanying drawings, and details are not described herein again.

For example, a focus mounting groove 1311 may be formed on a surface that is of the focus bracket 131 and that faces the focus coil 1221. An image stabilization mounting groove 1323 may be formed on a surface that is of the image stabilization bracket 132 and that faces the image stabilization coil 1222. The magnetic piece 124 of the actuator 12 may include a focus magnetic piece 1241 and an image stabilization magnetic piece 1242. The focus magnetic piece 1241 may be mounted in the focus mounting groove 1311. The image stabilization magnetic piece 1242 may be mounted in the image stabilization mounting groove 1323. In this case, the focus magnetic piece 1241 may be located between the focus coil 1221 and the carrier. The image stabilization magnetic piece 1242 may be located between the image stabilization coil 1222 and the image stabilization magnetic piece 1242.

It may be understood that when a signal is applied to the focus coil 1221, the focus coil 1221 may cooperate with the focus magnetic piece 1241, to drive the focus bracket 131 and drive the image stabilization bracket 132 to move relative to the base 111 in the Z-axis direction. In other words, the lens 20 may move relative to the base 111 in the Z-axis direction under the drive of the carrier 13, to implement an auto focus (auto focus, AF) function.

When a signal is applied to the image stabilization coil 1222, the image stabilization coil 1222 may cooperate with the image stabilization magnetic piece 1242, to drive the first bracket 1321 and drive the second bracket 1322 to move relative to the focus bracket 131 in the X-axis direction, and/or drive the second bracket 1322 to move relative to the first bracket 1321 in the Y-axis direction. In other words, the lens 20 may move relative to the base 111 on an X-Y plane under the drive of the carrier 13, to implement an optical image stabilization (optical image stabilization, OIS) function.

In other words, the motor 10 in this implementation may be an integrated motor that has both the auto focus function and an optical image stabilization function. The integrated motor may be designed as a vertical motor. In this way, the motor 10 may drive the lens 20 to move in an optical axis direction (namely, the Z-axis direction in this implementation) of the lens 20, to implement auto focus. The motor 10 may further drive the lens 20 to move in perpendicular directions (namely, the X-axis direction and the Y-axis direction in this implementation) of the optical axis direction of the lens 20, to implement optical image stabilization.

Refer to FIG. 13a and FIG. 13b again. A second avoidance groove 1312 may be provided on the focus bracket 131. The second avoidance groove 1312 may communicate with a bottom space of the image stabilization bracket 132 and the third communicating hole 133. When the carrier 13 is mounted in the accommodating space 11a of the base 111, the second avoidance groove 1312 may communicate with the first avoidance groove 113 at the bottom 1111. In this case, the first avoidance groove 113, the second avoidance groove 1312, and the bottom space of the image stabilization bracket 132 may jointly form at least a part of an avoidance space 14 of the motor 10. The avoidance space 14 may communicate with the mounting space 10a. For ease of understanding, FIG. 13b schematically shows the avoidance space 14 by using a dashed line. A size of an area enclosed by the dashed line is slightly greater than that of the avoidance space 14. In this implementation, disposing of the avoidance space 14 does not affect implementation of a function of the motor 10.

In some implementations, the second avoidance groove 1312 may not be provided on the focus bracket 131.

In another implementation, the avoidance space 14 may be alternatively formed in the fastening base 11 or formed in the fastening base 11 and the carrier 13 in another manner. A manner of forming the avoidance space 14 is not limited in this application.

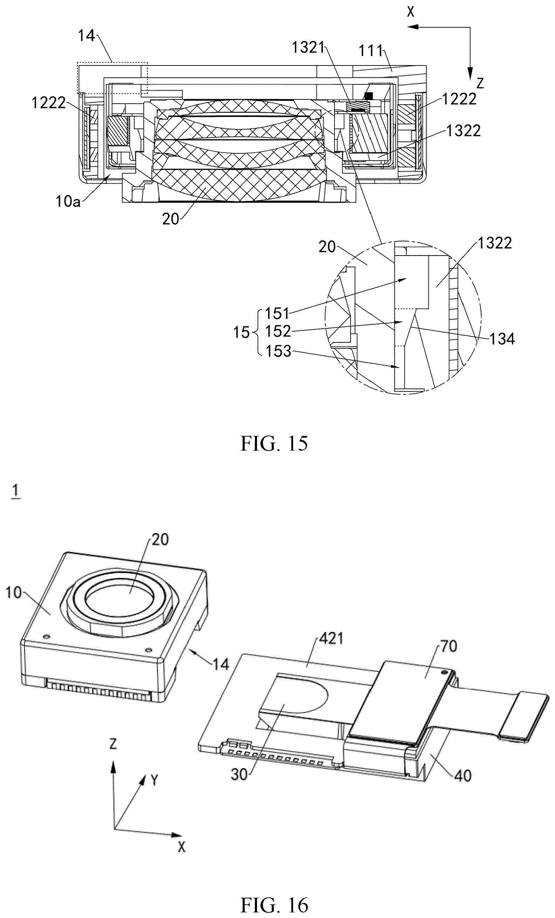

FIG. 15 is a schematic partial cross-sectional view of the camera module 100 shown in FIG. 3 on a B-B line from another perspective in an implementation.

As shown in FIG. 15, a first adhesive overflow groove 15 may be formed between the lens 20 and an inner side of the second bracket 1322. The inside of the first adhesive overflow groove 15 may be coated with an adhesive to form an adhesive layer. The lens 20 may be fastened to the carrier 13 via the adhesive layer.

For example, the first adhesive overflow groove 15 may include a first part 151, a second part 152, and a third part 153 that communicate with each other in sequence. The first part 151, the second part 152, and the third part 153 may be arranged in the optical axis direction of the lens 20. A width of the first part 151 may be greater than a width of the second part 152 and a width of the third part 153. The width of the second part 152 may be greater than the width of the third part 153. The widths of the first part 151, the second part 152, and the third part 153 are widths in the X-axis direction.

For example, the width of the first part 151 may be greater than or equal to 0.5 mm. In this case, a distance between a wall surface of the carrier 13 and the lens 20 is sufficient to prevent the adhesive from overflowing. In some implementations, the carrier 13 may have an adhesive flow slope 134 facing the second part 152. An included angle less than or equal to 60° may be formed between the adhesive flow slope 134 and the optical axis direction of the lens 20. In another implementation, the width of the third part 153 may be within a range of 0.1 mm to 0.5 mm.

It may be understood that when the width of the third part 153 of the first adhesive overflow groove 15 is within the range of 0.1 mm to 0.5 mm, an excessively large width of the third part 153 may be avoided, to avoid an offset of the lens 20 in an assembly process. It should be noted that the foregoing disposing solutions of the first adhesive overflow groove 15 may be combined. This is not limited in this application.

In some implementations, when assembly is performed between the lens 20 and the motor 10, the lens 20 may be assembled with the carrier 13 of the motor 10 from an upper part of the motor 10, the lens 20 and the motor 10 are turned over, and then the adhesive is injected into the first adhesive overflow groove 15 to form the adhesive layer, so that the lens 20 can be fastened to the carrier 13 of the motor 10 via the adhesive layer. The lens 20 and the motor 10 may also be assembled by using an active lens focus technology.

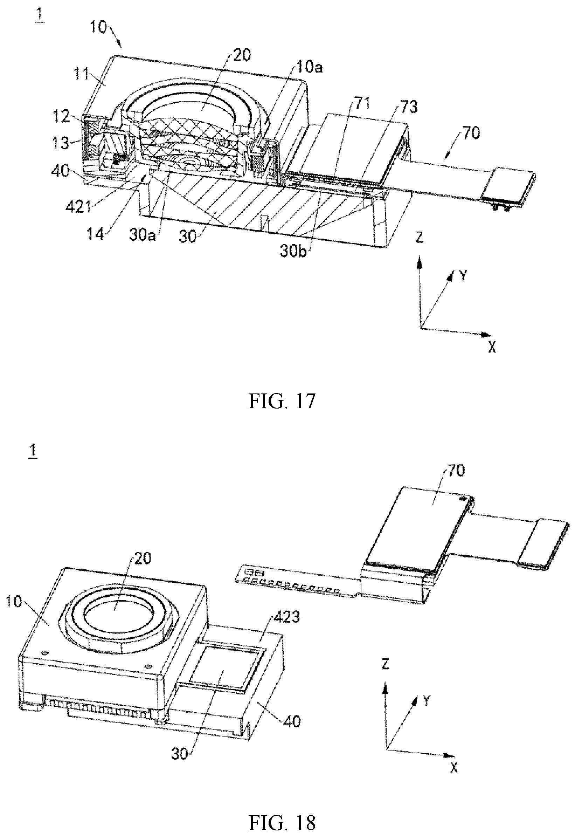

FIG. 16 is a diagram of a partial mounting process of the camera assembly 1 shown in FIG. 4 in an implementation. FIG. 17 is a schematic partial cross-sectional view of the camera module 100 shown in FIG. 3 on a B-B line.

As shown in FIG. 16 and FIG. 17, the motor 10 may collaborate with the lens 20 to be fastened to the first upper surface 421 of the prism bracket 40. In this case, the prism 30 may be located on a bottom side of the motor 10. A part of the prism 30 may be located in the avoidance space 14. The incident surface 30a of the prism 30 may face the lens 20. The emergent surface 30b of the prism 30 may be exposed relative to the motor 10, that is, the emergent surface 30b of the prism 30 is not blocked by the motor 10.

For example, the motor 10 and the prism bracket 40 may be assembled by using the active lens focus technology. After feature points of the motor 10 and the prism bracket 40 are visually identified, the mobile mechanical arm of the device assembly machine may capture the motor 10, with the lens 20, to move to a corresponding position of the prism bracket 40 for fastening, so as to complete assembly between the motor 10 and the prism bracket 40. It may be understood that, in this implementation, the sensor assembly 70 and the prism 30 are first mounted, and then the motor 10, the lens 20, and the prism 30 are mounted. This mounting manner is simple and has high accuracy.

FIG. 18 is a diagram of a partial mounting process of the camera assembly 1 shown in FIG. 4 in another implementation.

As shown in FIG. 18, in another implementation, the motor 10, the lens 20, and the prism 30 may be mounted first, and then the sensor assembly 70 and the prism 30 are mounted.

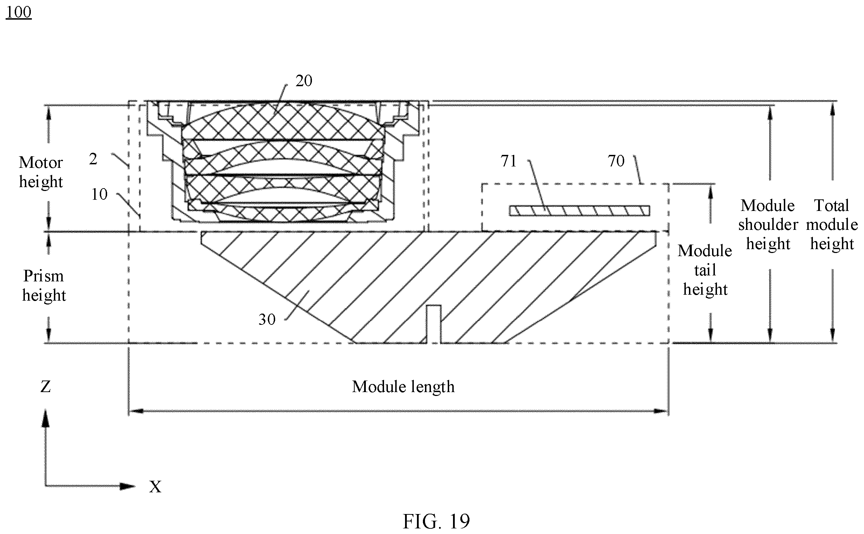

FIG. 19 is a schematic partial cross-sectional view of the camera module 100 shown in FIG. 3 on a B-B line in an implementation.

As shown in FIG. 19, the lens 20 and the sensor assembly 70 may be located on a same side of the prism 30. A bottom surface of the housing 2 may form a bottom surface of the entire camera module 100. In this case, in the Z-axis direction, a distance from a top surface of the sensor assembly 70 to the bottom surface of the camera module 100 is a module tail height. A distance from a top surface of the motor 10 to the bottom surface of the camera module 100 is a module shoulder height. A distance from a top surface of the lens 20 to the bottom surface of the camera module 100 is a total module height. A length of the housing 2 in the X-axis direction is a total module length.

It may be understood that, in the camera module 100 in this implementation, the prism 30 is disposed to change an optical path, so that the lens 20 and the prism 30 are arranged at a module height, and the image sensor 71 and the prism 30 are also arranged at the module height. This effectively reduces the module length. The lens 20 and the image sensor 71 are arranged on the same side of the prism 30, which effectively reduces the module height. In addition, in this implementation, the avoidance space 14 is further disposed inside the motor 10, and the prism 30 is partially located in the avoidance space 14, so that the motor 10 may sink relative to the prism 30, and the prism 30, the motor 10, and the image sensor 71 are arranged more compactly. Therefore, the module height can be further reduced, and an overall size of the camera module 100 is small, to facilitate miniaturization of the camera module 100.

Furthermore, the lens 20 and the image sensor 71 are arranged on the same side of the prism 30, so that an optical axis of the lens 20 is in a normal direction relationship with the first surface 31 of the prism 30. In addition, a phase surface of the image sensor 71 is in a normal direction relationship with the optical axis of the lens 20, and is parallel to the first surface 31 of the prism 30. When the ray is incident to the prism 30 through the lens 20, the ray is reflected a plurality of times inside the prism 30, and then the ray is emitted by the emergent surface 30b and is imaged on the image sensor 71. In this way, before being imaged on the image sensor 71, the ray may be reflected a plurality of times inside the prism 30, so that the optical path may be folded. This effectively increases a focal length of the camera module 100 and a total track length (total track length, TTL) of an optical system. In other words, in the camera module 100 in this implementation, the prism 30 may be disposed to reflect the ray a plurality of times, to increase the total track length of the optical system without increasing a physical length of the module, so that the camera module 100 can be miniaturized while obtaining a long focal length.

In addition, when the motor 10 drives the lens 20 to move to implement an image stabilization function, a motion mode of the lens is translation. This can avoid impact on image quality because a reflection mirror in a periscope optical system rotates to cause rotation of an image in a field of view. In addition, the motor 10 in this implementation is an integrated motor 10, and a structure of the motor 10 is simpler, which helps reduce manufacturing costs of the entire camera module 100.

In some implementations, as shown in FIG. 19, when a length of a diagonal of a target surface of the image sensor 71 is 0.5 inch, a total track length of an optical system of the camera module 100 may be within a range of 15 mm to 30 mm. The camera module 100 may implement 2x to 5x zoom, and an effective focal length of the camera module 100 may be within a range of 10 mm to 20 mm. In this case, a motor height of the camera module 100 may be within a range of 2 mm to 5 mm. A prism height may be within a range of 2.5 mm to 5 mm. The module length may be within a range of 15 mm to 30 mm. The module tail height may be within a range of 3 mm to 7 mm. The module shoulder height may be within a range of 5 mm to 10 mm. The total module height may be within a range of 6 mm to 15 mm.

In some implementations, the sensor assembly 70 may also include an image stabilization component. The image stabilization component may control the image sensor 71 to move in the perpendicular direction of the optical axis direction of the lens 20, to implement an optical image stabilization function of the image sensor 71. In this case, the camera module 100 may be a dual image stabilization camera that has both image stabilization of the lens 20 and image stabilization of the image sensor 71, which helps improve image quality of the camera module 100. Alternatively, in some other implementations, the motor 10 may further control only the lens 20 to move in the optical axis direction, to implement the auto focus function. In this case, the camera module 100 may implement the optical image stabilization function of the image sensor 71 by using only the image stabilization component in the sensor assembly 70, to implement the optical image stabilization function of the entire camera module 100.

In another implementation, the camera module 100 may further implement the auto focus function by controlling the prism 30 to move in the optical axis direction, and implement the optical image stabilization function by controlling the image sensor 71 to move in the perpendicular direction of the optical axis direction of the lens 20. Alternatively, the camera module 100 may further implement the auto focus function and the optical image stabilization function by controlling the prism 30 to move in both the optical axis direction and the perpendicular direction of the optical axis direction of the lens 20, and implement the optical image stabilization function by controlling the image sensor 71 to move in the perpendicular direction of the optical axis direction of the lens 20.

The foregoing specifically describes the structure of the camera module 100. The following specifically describes the structure of the prism 30 with reference to related accompanying drawings.

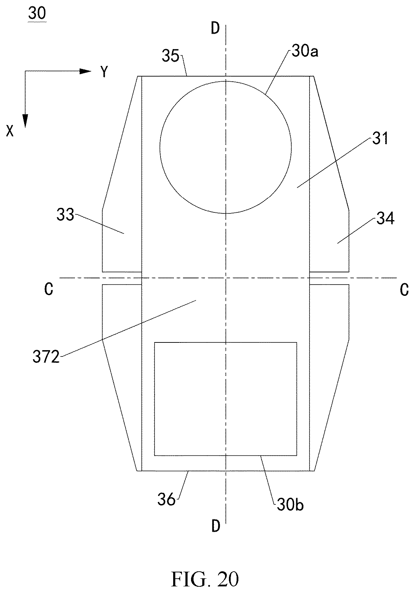

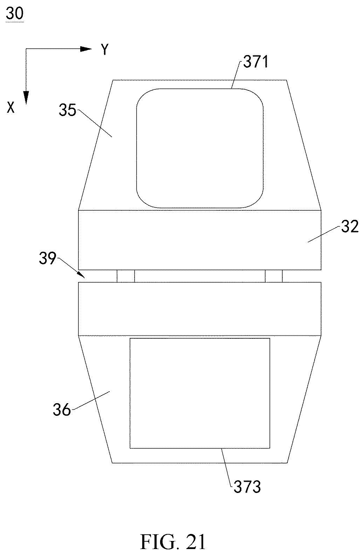

FIG. 20 is a diagram of a structure of the prism 30 shown in FIG. 8 from another perspective. FIG. 21 is a diagram of a structure of the prism 30 shown in FIG. 8 from still another perspective.

As shown in FIG. 20 and FIG. 21, the prism 30 may further include at least two reflective surfaces. In this case, the reflective surfaces and the transmission surface (namely, the incident surface 30a and the emergent surface 30b) may jointly form a prism working surface of the prism 30. For example, there may be three reflective surfaces: a first reflective surface 371, a second reflective surface 372, and a third reflective surface 373. The first reflective surface 371 may be located on the third side surface 35. The second reflective surface 372 may be located on the first surface 31. The third reflective surface 373 may be located on the fourth side surface 36. In this case, in the Z-axis direction, both the first reflective surface 371 and the third reflective surface 373 may be located on a bottom side of the incident surface 30a. The second reflective surface 372 and the incident surface 30a are located on a same side of the prism 30. An included angle may be formed between the first reflective surface 371 and the emergent surface 30b (that is, an included angle is formed between the first surface 31 and the third side surface 35). An included angle may be formed between the third reflective surface 373 and the emergent surface 30b (that is, an included angle is formed between the first surface 31 and the fourth side surface 36). The second reflective surface 372 may be located between the incident surface 30a and the emergent surface 30b. In another implementation, a specific quantity and positions of the reflective surfaces may change based on a specific shape of the prism 30.

For example, the second reflective surface 372 may have an overlapping area with the incident surface 30a. In another implementation, the second reflective surface 372 may have an overlapping area with the emergent surface 30b. Alternatively, the second reflective surface 372 may have an overlapping area with both the incident surface 30a and the emergent surface 30b.

For example, the camera assembly 1 may further include an anti-reflective film (not shown in the figure) and a reflective film (not shown in the figure). The anti-reflective film may be separately disposed on the incident surface 30a and the emergent surface 30b of the prism 30, to increase light transmission performance of the incident surface 30a and the emergent surface 30b. The reflective film may be disposed on reflective surfaces (namely, the first reflective surface 371, the second reflective surface 372, and the third reflective surface 373 in this implementation) of the prism 30, to increase reflective performance of the reflective surfaces.

For example, a non-imaging surface of the prism 30 may be formed on a part of surfaces, of the prism 30, except the incident surface 30a, the emergent surface 30b, and the reflective surfaces (namely, in this implementation, a part of the first side surface 33, the second side surface 34, and the third side surface 35 except the first reflective surface 371, a part of the fourth side surface 36 except the second reflective surface 372, a part of the first surface 31 except the second reflective surface 372, and the second surface 32). A light shielding layer may be disposed on the non-imaging surface of the prism 30, to prevent the stray light from entering the prism 30. In another implementation, the non-imaging surface of the prism 30 may be coated with light shielding ink, to prevent the stray light from entering the prism 30.

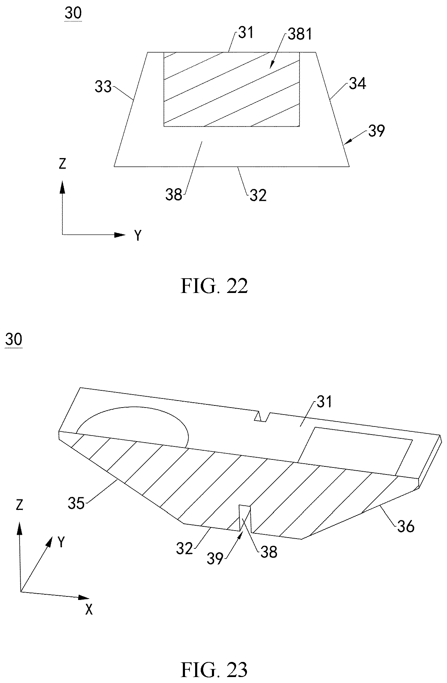

FIG. 22 is a schematic cross-sectional view of the prism 30 shown in FIG. 20 on a C-C line in an implementation. FIG. 23 is a schematic cross-sectional view of the prism 30 shown in FIG. 20 on a D-D line in an implementation.

As shown in FIG. 22 and FIG. 23, the prism 30 may further include a light blocking layer 38. The light blocking layer 38 may be located between the third side surface 35 and the fourth side surface 36, that is, located between the first reflective surface 371 and the third reflective surface 373 (refer to FIG. 21). The light blocking layer 38 may be connected to the second surface 32. A light transmission area 381 is formed in an upper middle part of the light blocking layer 38 for the ray to pass through. In this case, at least a part of the light blocking layer 38 may be spaced apart from the first surface 31.

For example, the prism 30 may be further provided with a groove 39. The groove 39 may be located between the third side surface 35 and the fourth side surface 36, that is, located between the first reflective surface 371 and the third reflective surface 373 (refer to FIG. 21). An opening of the groove 39 may be formed on the first side surface 33, the second side surface 34, and the second surface 32 (FIG. 21 also shows the groove 39 from another perspective). In this case, the groove 39 is recessed toward the inside of the prism 30. Then, light shielding processing is performed on a groove wall of the groove 39, to form the light blocking layer 38. In this way, the light blocking layer 38 is disposed inside the prism 30 to block the ray, to prevent impact on the image quality because of transmission of stray light outside the light transmission area 381.

In some implementations, the groove 39 may be formed by cutting edges in a local area of the prism 30. In this case, the prism 30 may be a tangent prism.

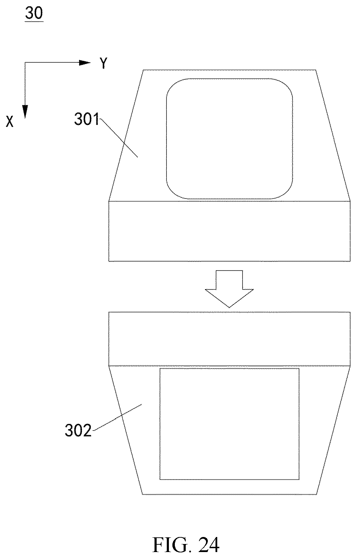

FIG. 24 is a diagram of assembling the prism 30 shown in FIG. 8 in another implementation.

As shown in FIG. 24, the prism 30 may alternatively be a glued prism. In this case, the prism 30 may include a first sub-part 301 and a second sub-part 302 that are separated. The first sub-part 301 may be fastened to the second sub-part 302 through gluing. In this way, the light blocking layer 38 may be formed by coating ink or disposing the light shielding layer on a gluing surface of the first sub-part 301 and/or the second sub-part 302.

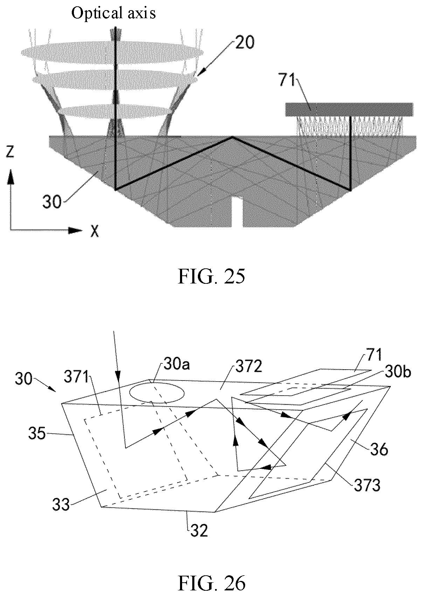

FIG. 25 is a schematic partial cross-sectional view of the camera module 100 shown in FIG. 3 on a B-B line.

As shown in FIG. 25, the ray may be emitted into the prism 30 from the incident surface 30a through the lens 20, reflected by the first reflective surface 371, the second reflective surface 372, and the third reflective surface 373 in sequence, emitted from the prism 30 through the emergent surface 30b, and finally imaged on the image sensor 71. The ray may be reflected for three or more odd times inside the prism 30. For example, the ray may alternatively be reflected for five or more times inside the prism 30.

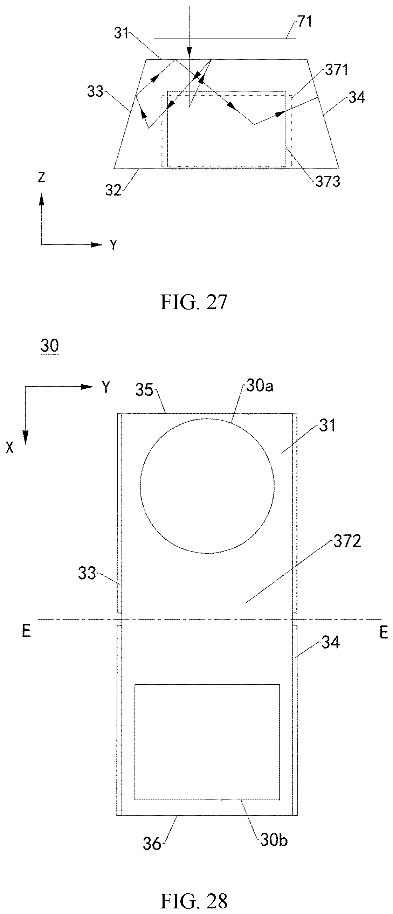

FIG. 26 is a diagram of a structure of the prism 30 and the image sensor 71 shown in FIG. 25. FIG. 27 is a diagram of a structure of the structure shown in FIG. 26 from another perspective.

As shown in FIG. 26 and FIG. 27, an included angle may be formed between the first side surface 33 of the prism 30 and the second side surface 34. An angle between the first side surface 33 and/or the second side surface 34 and the first surface 31 may be greater than or less than 90°. In this case, the prism 30 may be a trapezoidal special-shaped prism 30. In this implementation, an angle between the first side surface 33 and the first surface 31 may be greater than 90°. An angle between the second side surface 34 and the first surface 31 may be greater than 90°. In this case, a spacing between the first side surface 33 and the second side surface 34 may progressively increase in a direction away from the first surface 31. A width of the second surface 32 (namely, a length in the Y-axis direction in this implementation) is greater than a width of the first surface 31.

When an incident field of view of the stray light is small, and the stray light and the fourth side surface 36 of the prism 30 are in grazing Incidence X-ray diffraction, a reflectivity of the stray light is large. In this case, the stray light may be emitted from the incident surface 30a of the prism 30, and is absorbed by the second side surface 34 after being reflected by the third side surface 35, the second reflective surface 372, the fourth side surface 36, the first side surface 33, the first surface 31, and the fourth side surface 36 in sequence. Alternatively, the stray light may be emitted from the incident surface 30a of the prism 30, and is absorbed by the first side surface 33 after being reflected by the third side surface 35, the second reflective surface 372, the fourth side surface 36, the second side surface 34, the first surface 31, and the fourth side surface 36 in sequence. The stray light is reflected for six times inside the prism 30. It should be understood that FIG. 26 and FIG. 27 show an optical path when the stray light is absorbed by the second side surface 34.

When the incident field of view of the stray light is large, and an incident angle of the stray light to the third side surface 35 of the prism 30 is large, the reflectivity of the stray light is large. In this case, an incident angle of the stray light on the emergent surface 30b of the prism 30 increases, and the stray light may be totally reflected inside the prism 30, so that the stray light can be finally absorbed by the first side surface 33 or the second side surface 34.

It may be understood that the prism 30 in this implementation has a plurality of reflective surfaces. After the ray enters the prism 30 from the incident surface 30a of the prism 30, the ray may be reflected between the plurality of reflective surfaces until the ray is emitted from the emergent surface 30b, and is imaged on the image sensor 71. The ray may be reflected for three or more odd times inside the prism 30, so that an optical path can be folded, and the focal length of the camera module 100 and the total track length of the optical system are effectively increased. In other words, in this implementation, the total track length of the optical system may be increased, without increasing a physical length of the module, by disposing the prism 30 and a plurality of reflective surfaces inside the prism 30 to reflect the ray a plurality of times, so that the camera module 100 can be miniaturized while obtaining a long focal length.

In addition, in this implementation, anti-reflection processing is further performed on a non-imaging area of the prism 30, and the light shielding layer is disposed or light shielding ink is coated (for example, the light shielding layer is disposed on the first side surface 33 and the second side surface 34 of the prism 30), so that the stray light inside the camera module 100 can be effectively prevented from entering the inside of the prism 30 to affect the image quality.

In addition, even if the stray light enters the inside of the prism 30, the stray light may be reflected a plurality of times inside the prism 30, and the stray light is attenuated progressively through blackening processing, so that the stray light can be absorbed by the non-imaging area of the prism 30. In addition, in this implementation, because the spacing between the first side surface 33 and the second side surface 34 progressively increases in the direction away from the incident surface 30a, the stray light emitted into the prism 30 can be reflected inside the prism 30 a more quantity of times, or the stray light is totally reflected inside the prism 30, so that the stray light can be finally absorbed by the first side surface 33 or the second side surface 34, to prevent the stray light from being imaged on the image sensor 71 and eliminate impact of the stray light on the image quality.

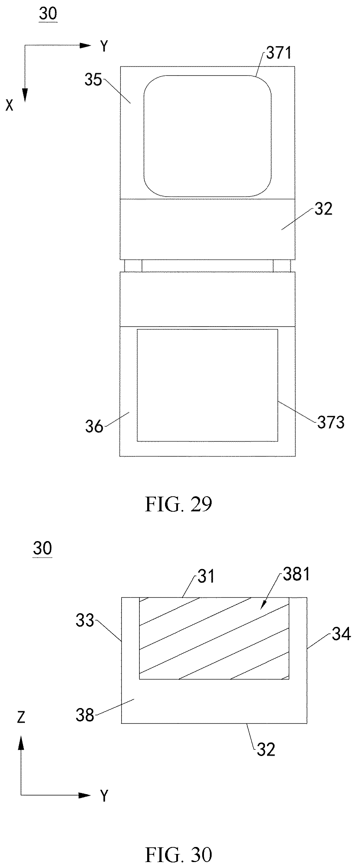

FIG. 28 is a diagram of a structure of the prism 30 shown in FIG. 20 in another implementation. FIG. 29 is a diagram of a structure of the prism 30 shown in FIG. 28 from another perspective. FIG. 30 is a schematic cross-sectional view of the prism 30 shown in FIG. 28 on an E-E line in an implementation.

As shown in FIG. 28 to FIG. 30, a structure of the prism 30 in this implementation is roughly the same as that of the prism 30 shown in FIG. 20, and the same part is not described again. A difference lies in that the first side surface 33 and the second side surface 34 of the prism 30 in this implementation may be parallel to each other. In this case, the prism 30 may be a regular elongated prism 30. The first side surface 33 may be perpendicular to the first surface 31. The second side surface 34 may be perpendicular to the first surface 31.

The foregoing specifically describes the structure of the prism 30, and the following describes specific disposing of the light filter 73 in detail with reference to related accompanying drawings.

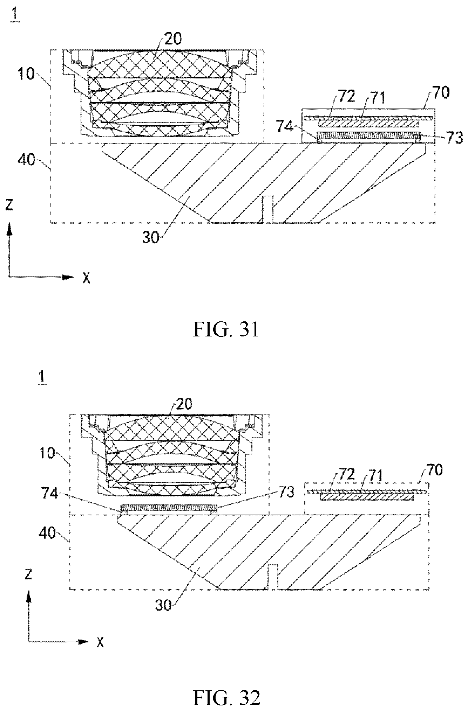

FIG. 31 is a schematic cross-sectional view of a structure shown in FIG. 12 in another implementation.

As shown in FIG. 31, a structure of the camera module 100 in this implementation is roughly the same as that of the camera module 100 shown in FIG. 12, and the same part is not described again. A difference lies in that the fastener 74 may be further located between the light filter 73 and the prism 30. The light filter 73 may be fastened to the prism 30 through the fastener 74. The light filter 73 may be disposed opposite to the emergent surface 30b of the prism 30.

For example, the fastener 74 may be an adhesive layer. The fastener 74 may be fastened around the emergent surface 30b in an adhesive dispensing manner.

FIG. 32 is a schematic cross-sectional view of a structure shown in FIG. 12 in still another implementation.

As shown in FIG. 32, a structure of the camera module 100 in this implementation is roughly the same as that of the camera module 100 shown in FIG. 12, and the same part is not described again. A difference lies in that the fastener 74 and the light filter 73 may be jointly located between the lens 20 and the prism 30. The fastener 74 may be located between the light filter 73 and the prism 30. The light filter 73 may be fastened to the prism 30 through the fastener 74. The light filter 73 may be disposed opposite to the incident surface 30a of the prism 30.

For example, the fastener 74 may be an adhesive layer. The fastener 74 may be fastened around the incident surface 30a in an adhesive dispensing manner.

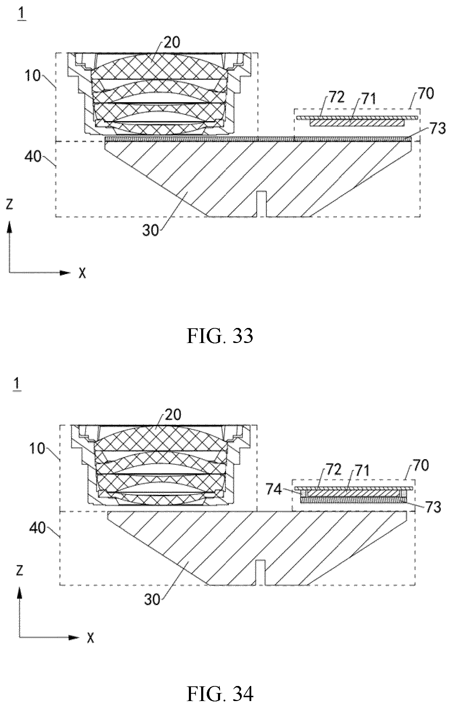

FIG. 33 is a schematic cross-sectional view of a structure shown in FIG. 12 in yet another implementation.

As shown in FIG. 33, a structure of the camera module 100 in this implementation is roughly the same as that of the camera module 100 shown in FIG. 12, and the same part is not described again. A difference lies in that the light filter 73 in this implementation may be directly fastened to the first surface 31 of the prism 30. The light filter 73 may cover the incident surface 30a and/or the emergent surface 30b. The light filter 73 may be an infrared cut-off film. It may be understood that, in this implementation, the infrared cut-off film is disposed on the first surface 31 of the prism 30, to form the light filter 73. In this way, the light filter 73 is directly disposed on the surface of the prism 30, so that the fastener 74 does not need to be additionally disposed, which helps save an internal space of the camera module 100.

FIG. 34 is a schematic cross-sectional view of a structure shown in FIG. 12 in another implementation.

As shown in FIG. 34, a structure of the camera module 100 in this implementation is roughly the same as that of the camera module 100 shown in FIG. 12, and the same part is not described again. A difference lies in that the fastener 74 in this implementation may be an adhesive layer. The fastener 74 may be fastened to the circuit board 72 in an adhesive dispensing manner, and is located around the image sensor 71. The light filter 73 is fastened to the circuit board 72 through the fastener 74.

The foregoing embodiments are merely intended for describing the technical solutions of this application, but not for limiting this application. Although this application is described in detail with reference to the foregoing implementations, a person of ordinary skilled in the art should understand that modifications may still be made to the technical solutions described in the foregoing implementations or equivalent replacements may be made to some technical features, and such modifications or replacements do not cause the essence of the corresponding technical solutions to depart from the scope of the technical solutions of implementations of this application. When no conflict occurs, the implementations of this application and the features in the implementations may be mutually combined.

## Claims

1. A camera module (100), comprising:
a motor (10), having a mounting space (10a) and an avoidance space (14) communicating with the mounting space (10a), wherein the mounting space (10a) is located in a middle part of the motor (10) and penetrates from a top of the motor (10) to a bottom of the motor (10), the avoidance space (14) is located at the bottom of the motor (10), and the avoidance space (14) communicates with the mounting space (10a) and extends to one side of the motor (10);
a lens (20), mounted in the mounting space (10a);
a prism (30), located on a bottom side of the motor (10) and partially located in the avoidance space (14), wherein the prism (30) comprises an incident surface (30a) and an emergent surface (30b), the incident surface (30a) faces the lens (20), the incident surface (30a) and the emergent surface (30b) are located on a same side of the prism (30), and the emergent surface (30b) is exposed relative to the motor (10); and
an image sensor (71), located on a side that is of the prism (30) and that faces the lens (20), and disposed facing the emergent surface (30b), wherein
after passing through the lens (20), a ray enters the prism (30) from the incident surface (30a), is emitted from the emergent surface (30b) after being reflected a plurality of times inside the prism (30), and is imaged on the image sensor (71).

2. The camera module (100) according to claim 1, wherein the motor (10) comprises a fastening base (11), an actuator (12), and a carrier (13), the actuator (12) and the carrier (13) are both mounted on an inner side of the fastening base (11), the actuator (12) is configured to drive the carrier (13) to move, and the lens (20) is fastened to an inner side of the carrier (13); and
at least a part of the avoidance space (14) is formed in the fastening base (11).

3. The camera module (100) according to claim 2, wherein a first adhesive overflow groove (15) is formed between the carrier (13) and the lens (20), the first adhesive overflow groove (15) comprises a first part (151), a second part (152), and a third part (153) that communicate with each other in sequence, the first part (151), the second part (152), and the third part (153) are arranged in an optical axis direction of the lens (20), a width of the first part (151) is greater than a width of the second part (152) and a width of the third part (153), and the width of the second part (152) is greater than the width of the third part (153).

4. The camera module (100) according to claim 3, wherein the width of the first part (151) is greater than or equal to 0.5 mm; or
the carrier (13) is provided with an adhesive flow slope (134) facing the second part (152), and an included angle less than or equal to 60° is formed between the adhesive flow slope (134) and the optical axis direction of the lens (20); or
the width of the third part (153) is within a range of 0.1 mm to 0.5 mm.

5. The camera module (100) according to any one of claims 2 to 4, wherein the prism (30) further comprises a first reflective surface (371), a second reflective surface (372), and a third reflective surface (373);
in the optical axis direction of the lens (20), the first reflective surface (371) is located on a bottom side of the incident surface (30a), and an included angle is formed between the first reflective surface (371) and the incident surface (30a);
the second reflective surface (372) and the incident surface (30a) are located on a same side of the prism (30), and the second reflective surface (372) is located between the incident surface (30a) and the emergent surface (30b);
in the optical axis direction of the lens (20), the third reflective surface (373) is located on a bottom side of the emergent surface (30b), and an included angle is formed between the third reflective surface (373) and the emergent surface (30b); and
after entering the prism (30) from the incident surface (30a), the ray is reflected on the first reflective surface (371), the second reflective surface (372), and the third reflective surface (373) in sequence, and then is emitted from the emergent surface (30b).

6. The camera module (100) according to claim 5, wherein the prism (30) further comprises a light blocking layer (38), the light blocking layer (38) is located between the first reflective surface (371) and the third reflective surface (373), the light blocking layer (38) is configured to block the ray, and a light transmission area (381) is formed in an upper middle part of the light blocking layer (38).

7. The camera module (100) according to claim 5 or 6, wherein the prism (30) further comprises a first side surface (33) and a second side surface (34), the first side surface (33) and the second side surface (34) are respectively located on two sides of the incident surface (30a) and the emergent surface (30b), the first side surface (33) is parallel to the second side surface (34), and a light shielding layer is disposed on the first side surface (33) and the second side surface (34).

8. The camera module (100) according to claim 5 or 6, wherein the prism (30) further comprises a first side surface (33) and a second side surface (34), the first side surface (33) and the second side surface (34) are respectively located on two sides of the incident surface (30a) and the emergent surface (30b), an included angle is formed between the first side surface (33) and the second side surface (34), a spacing between the first side surface (33) and the second side surface (34) progressively increases in a direction away from the incident surface (30a), and a light shielding layer is disposed on the first side surface (33) and the second side surface (34).

9. The camera module (100) according to claim 7 or 8, wherein the prism (30) is provided with a groove (39), an opening of the groove (39) is formed on the first side surface (33), the second side surface (34), and a bottom surface of the prism (30), and a groove wall of the groove (39) is used to form the light blocking layer (38).

10. The camera module (100) according to any one of claims 7 to 9, wherein the camera module (100) further comprises a prism bracket (40), the prism bracket (40) is located on the bottom side of the motor (10) and a bottom side of the image sensor (71), and the prism (30) is fastened to an inner side of the prism bracket (40).

11. The camera module (100) according to claim 10, wherein the prism bracket (40) is provided with an accommodation space (43), a wall surface of the accommodation space (43) is provided with a plurality of second adhesive overflow grooves (433), and the prism (30) is located in the accommodation space (43) and is fastened to the wall surface of the accommodation space (43) via an adhesive layer.

12. The camera module (100) according to any one of claims 2 to 11, wherein the motor (10) is configured to drive the lens (20) to move in the optical axis direction of the lens (20), and is further configured to drive the lens (20) to move in a direction perpendicular to the optical axis direction of the lens (20).

13. The camera module (100) according to any one of claims 2 to 12, wherein the fastening base (11) comprises a base (111), the carrier (13) comprises a focus bracket (131) and an image stabilization bracket (132), the focus bracket (131) is movably connected to the base (111), the image stabilization bracket (132) is movably connected to the focus bracket (131), the actuator (12) is mounted on the base (111), and the lens (20) is fastened to the image stabilization bracket (132); and
the actuator (12) is configured to drive the focus bracket (131) to drive the image stabilization bracket (132) to move relative to the base (111), and the actuator (12) is further configured to drive the image stabilization bracket (132) to move relative to the focus bracket (131).

14. The camera module (100) according to claim 13, wherein the base (111) is provided with a first avoidance groove (113), the first avoidance groove (113) penetrates a bottom of the base (111), the focus bracket (131) is provided with a second avoidance groove (1312), and the second avoidance groove (1312) communicates with a bottom space of the image stabilization bracket (132) and the first avoidance groove (113); and
the first avoidance groove (113), the second avoidance groove (1312), and the bottom space of the image stabilization bracket (132) form the avoidance space (14).

15. The camera module (100) according to any one of claims 1 to 14, wherein the camera module (100) further comprises a light filter (73); and
the light filter (73) is located between the prism (30) and the image sensor (71), and the light filter (73) and the emergent surface (30b) are disposed opposite to each other; or the light filter (73) is located between the prism (30) and the lens (20), and the light filter (73) and the incident surface (30a) are disposed opposite to each other.

16. The camera module (100) according to claim 15, wherein the camera module (100) further comprises a fastener (74), and the light filter (73) is fastened to the prism (30) through the fastener (74).

17. The camera module (100) according to any one of claims 1 to 14, wherein the camera module (100) further comprises a circuit board (72), a fastener (74), and a light filter (73);
the image sensor (71) is fastened to the circuit board (72), and is electrically connected to the circuit board (72); and
the light filter (73) is fastened to the circuit board (72) through the fastener (74), and the light filter (73) is located between the emergent surface (30b) of the prism (30) and the image sensor (71).

18. The camera module (100) according to claim 16 or 17, wherein the fastener (74) is a fastening bracket or an adhesive layer.

19. The camera module (100) according to any one of claims 1 to 14, wherein the camera module (100) further comprises a light filter (73), and the light filter (73) is disposed on the prism (30) by using a film coating process or a film attaching process, and covers the incident surface (30a) and/or the emergent surface (30b).

20. An electronic device, comprising an image processor and the camera module (100) according to any one of claims 1 to 19, wherein the image processor is communicatively connected to the camera module (100), and the image processor is configured to obtain image data from the camera module (100) and process the image data.
